# EUROPEAN PATENT SPECIFICATION

(11) **EP 1 350 355 B1**
(45) Date of publication and mention of the grant of the patent: **21.03.2007**
(21) Application number: 01995092.2
(22) Date of filing: 28.12.2001
(51) Int. Cl.: H04L 7/00, H04L 12/54

(54) **TIME SYNCHRONIZATION IN COMPUTER NETWORK**
ZEITSYNCHRONISATION IN EINEM COMPUTERNETZWERK
SYNCHRONISATION TEMPORELLE SUR UN RESEAU INFORMATIQUE

(30) Priority: 28.12.2000 NO 20006684
(43) Date of publication of application: 08.10.2003
(73) Proprietor: ABB RESEARCH LTD., 8050 Zürich (CH)
(72) Inventor: JOHANNESSEN, Svein, N-0376 Oslo (NO); SKEIE, Tor, N-3512 Honefoss (NO); LOKSTAD, Trond, N-1450 Nesoddtangen (NO)
(74) Representative: Valkeiskangas, Tapio Lassi Paavali
(86) International application number: PCT/NO2001/000516
(87) International publication number: WO 2002/054662

(56) References cited:
- EP-A2- 0 613 271
- WO-A2-01/95562
- 'Precise synchronization of computer networks: network time protocol (NTP) for TCP/IP' TRUETIME, [Online] 05 July 1997, XP002909936 Retrieved from the Internet: <URL:http://www.truetime.com/DOCSn/ap23.pdf > [retrieved on 2002-03-26]
- HOLMEIDE, O. ET AL.: 'Time synchronization in switched ethernet', [Online] September 2001, XP002909937 Retrieved from the Internet: <URL:http://ethernet.industrial-networking. com/articles/i07switched.asp> [retrieved on 2002-03-26]

## Description

### Field of the invention

A method for enhanced accuracy Network Time Protocol time synchronization in a computer network, such as a local area network comprising a time client and a timeserver.

### Background of the invention

The IETF (Internet Engineering Task Force group) Network Time Protocol (NTP) standard RFC 1305 defines a method for synchronizing workstation clocks across the Internet. This method has an accuracy of about 1 ms (millisecond), which is adequate for time stamping files and other non-real-time operating system chores. Certain classes of automation systems, the most notable being Substation Automation, i.e. the control and protection of energy distribution network nodes, require much more precise time synchronization, for example, 1µs for class 1 applications and 25µs for class 2 applications. A class 1 application is, for example, time tagging of syncrophasors and a class 2 application is, for example, time tagging of phasors.
The RFC 1305 standard comprises an algorithm for calculation of the corrections to a time-of-day clock in one node, such as a time client, relative to a reference time-of-day clock in another node, such as a timeserver. The algorithm is based on a network packet, from now on called a time-request packet, containing three important time stamps:
T1 (*Originate Timestamp*): The time the time request packet was generated in the client asking for the current time.
T2 (*Receive Timestamp*): The time the time request packet arrived at the timeserver.
T3 (*Transmit Timestamp*): The time the time request packet was updated and put into a transmission queue at the timeserver.
   In addition, the calculations require:
T4: The time the time request packet arrived back at the time client.
T2 and T4 are easily determined with accuracy down to microseconds, and sometimes even more accurate, using hardware or software time stamps based on network packet arrival interrupts.

Accurate determination of T1 and T3 is, however, a problem. For full accuracy, T1 and T3 should be the time when the network packet leaves the time client or the timeserver. The problem is that T1 and T3 are not available until the network packet has already left the timeserver or time client and then it is too late to incorporate them into the packet. Therefore, the largest part of the time synchronization inaccuracy for an NTP setup is the variation in the delay between T1 and the actual time the network packet leaves the time client, as well as the variation in the delay between T3 and the actual time the network packet leaves the time server.

The document EP-A2-0 613 271 describes a method for improving the accuracy of a time synchronisation protocol, whereby the actual time a time sync message was sent, is sent to the synchronising entity in a second time sync message, allowing the receiving entity to compensate for the processing delay in the sending entity.

### Summary of the invention

The object of the invention is to provide a method for Network Time Protocol (NTP) or Simple Network Time Protocol (SNTP) time synchronization in a computer network, without the disadvantages mentioned under

### background of the invention.

This object is achieved by a method according to the independent claim 1.

The invention provides a method where the accuracy of the time stamps involved may be substantially increased while still being compatible with the original protocol.

In one embodiment of the invention, the computer network is a Local Area Network (LAN) and uses the Internet communications protocol suite, usually denoted TCP/IP.

According to another preferred embodiment, the invention is used in control and protection of an energy distribution network node for improving time accuracy in the Network Time Protocol.

According to another preferred embodiment of the invention, the Network Time Protocol is extended in a backwards-compatible way such that accuracy in the order of 10µs or better may be attained.

### Brief description of the drawing

Fig. 1 is a schematic block diagram of a computer network, such as a LAN, comprising a time client and a timeserver where a time request packet is transmitted between the time client and the timeserver.
Fig. 2 is a schematic block diagram of a computer network, such as a LAN, with a store-and-forward and/or switching device arranged between the client and the server.

### Detailed description of preferred embodiments

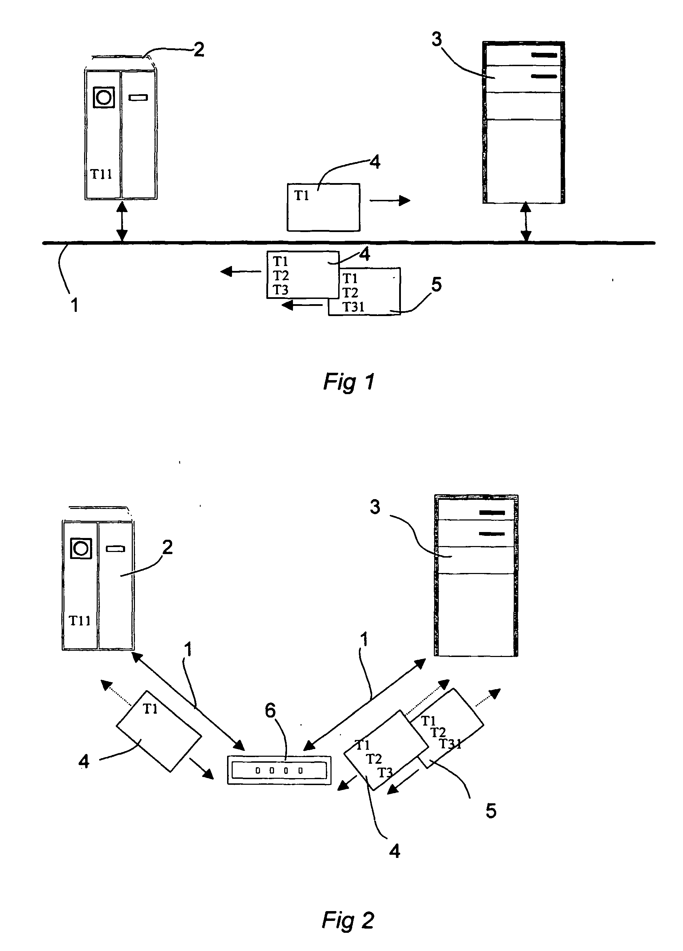

Figure 1 shows a schematic block-diagram of a computer network 1, such as a Local Area Network (LAN), comprising a time client 2 and a timeserver 3. A time request packet 4 is transmitted between the time client and the timeserver.

The computer network protocol used is the Internet communication suite, usually denoted TCP/IP.

The two main sources of inaccuracy that plagues the standard NTP method are reduced with the method described below. The method is concerned with a first and a second part of the algorithm in the standard NTP method, which will be described in the following.

The algorithm is based on the time-request packet, containing three important time stamps:
A first time stamp T1: The time the time request packet was generated in the client asking for the current time. A second time stamp T2: The time the time request packet arrived at the timeserver.
A third time stamp T3: The time the time request packet was updated and put into a transmission queue at the timeserver.

The first main source of inaccuracy is the variation in the delay between the first time stamp T1 and the exact time when the time request packet leaves the time client. To improve the time client accuracy the following steps are performed:
1. Create an NTP time request packet 4 and fill in the first time stamp T1.
2. Transmit the time request packet to the timeserver 3.
3. Get hold of the actual time stamp, hereinafter called the fourth time stamp T11, when the time request packet leaves the time client 2, using the network transmit interrupt or a hardware time stamp.
4. Store the fourth time stamp T11 in a data structure in the time client together with the first time stamp T1.The timeserver 3 receives the time request packet 4 and transmits it back to the time client 2
5. Replace the first time stamp T1 in the time request packet by the fourth time stamp T11, when the time request packet 4 returns from the timeserver.,
This exchange eliminates the inaccuracy associated with the originate timestamp T1 in the time calculation and thus an improved NTP time client is achieved. This corresponds to the first part in the algorithm.

The second main source of inaccuracy is the variation in the delay between the third time stamp T3 and the actual time the packet leaves the timeserver 3. To improve the timeserver accuracy, the following steps are preformed:
1. Create a duplicate packet 5 before entering the third time stamp T3 into the time request packet, when the time request packet arrives at the timeserver 3. This packet will hereinafter be denoted the time correction packet 5.
2. Transmit the time request packet 4 back to the time client 2.
3. Acquire an accurate time stamp, hereinafter called the fifth time stamp T31, when the time request packet leaves the timeserver, using the network transmission interrupt or a hardware time stamp.
4. Put the fifth time stamp T31 into the third time stamp T3 location in the time correction packet.
5. Transmit the time correction packet back to the time client.

Now, the returned time request packet 4 has the standard NTP inaccuracy in the third time stamp T3. However, if the third time stamp T3 in the returned time request packet 4 is replaced by the fifth time stamp T31 from the time correction packet 5, the accuracy of the time stamps in the resulting packet will be:
- T1: Maximum if the substitution described in the first part of the algorithm is performed.
- T2: Maximum always.
- T3: Maximum if the substitution described in the second part of the algorithm is performed.
In this way network access jitter is eliminated and only network transmission jitter is left.

### Compatibility with Network Time Protocol

If an improved NTP time client connects to a standard NTP timeserver, only one packet will be returned, i.e. the time request packet. The improved time client executes the first part of the algorithm eliminating the first time stamp T1 inaccuracy. The resulting accuracy will therefore be better than standard NTP.

If a standard NTP client connects to an improved NTP time server, it will get two time packets from the time server, i.e. the time request packet and the time correction packet, both of these having standard NTP accuracy. If the first packet is received successfully, the time will be updated according to the contents of that packet and the second packet will be discarded as an unnecessary duplicate. If the first packet is lost, the time will be updated according to the contents of the second packet. The second packet contains the T31 timestamp which, taken by itself, is a T3 timestamp with standard NTP accuracy.

### Reducing network transmission jitter

In the case of a standard Local Area Network, the difference between the time stamp taken when the time request packet 4 leaves the client (server) transmitter and the time stamp taken when the same packet arrives at the server (client) receiver varies very little between transmissions. In the case where a store-and-forward and/or switching device 6 are/is in the path between the client and the server as in switched Ethernet, this difference will vary according to the traffic load at the time. Therefore, a store-and-forward and/or switching device 6 will introduce an unpredictable jitter in the packet travel time between transmitter and receiver.

One way of reducing this jitter is to use broadcast or multicast packets as time request packets, between the time client 2 and the timeserver 3, together with a full duplex link to the store-and-forward device and/or switching device. The store-and-forward device and/or switching device will then be forced to forward this multicast packet to all connected nodes, usually with a time difference below one microsecond. In particular, the packet will be sent back to the originator, i.e. the time client or server, at a time very close to the time it is sent to the destination, i.e. the timeserver or client. This feature enables the originator to time stamp the reflected packet with a time stamp closely connected to the time the packet was sent to the destination from the store-and-forward device, eliminating the store-and-forward jitter.

Figure 2 shows an example of how to reduce the network transmission jitter when the store-and-forward device and/or switching device 6 is in the path between the timeserver 2 and the time client 3. The time request packet 4 is generated in the time client, and is stamped with a first time stamp T1 corresponding to the time it is generated. The time request packet is transmitted to the timeserver using a multicast or broadcast address. On the way to the timeserver, the time request packet passes the store-and-forward device and/or switching device, and when the request packet is reflected back to the time client from the store-and-forward and/or switching device, it is stamped with the fourth time stamp T11. This fourth time stamp T11 is stored in a data structure in the client together with the first time stamp T1.

The time request packet that is transmitted to the timeserver is stamped with the second time stamp T2 when it arrives at the timeserver 3. Now, the time correction packet 5 is created before entering the third time stamp T3 into the time request packet. The time request packet is sent back to the time client from the timeserver, using a multicast or broadcast address. On the way back to the time client, the time request packet passes the store-and-forward device and/or switching device, and is reflected back to the timeserver where it is stamped with a fifth time stamp T31. This fifth time stamp is stored in the third time stamp T3 location in the time correction packet 5 and transmitted to the time client.

The time client is able to do the same substitutions as described before, i.e. substituting T11 for T1 and T31 for T3, before calculating the time correction. The difference is that also the store-and-forward delay variations from the calculations are eliminated, further improving the accuracy.

In a preferred embodiment of the invention the time stamping of the fourth time stamp T11 or the fifth time stamp T31 is performed either in a network transmit interrupt or by using a dedicated hardware timer.

Before the calculations of the correct time, the time request packet 4 is also time-stamped with a sixth time stamp T4 (not shown) as it arrives back at the time client.

## Claims

1. A method for improving the accuracy of Network Time Protocol time synchronization in a computer network (1), the computer network comprising a time client (2) and a timeserver (3), the method comprising the steps of
- generating a time request packet (4) in the time client,
- time-stamping the time request packet with a first time stamp (T1) corresponding to the time the time request packet is generated,
- transmitting the time request packet to the time server,
- time-stamping the time request packet with a second time stamp (T2) when it arrives at the time server,
- time-stamping the time request packet with a third time stamp (T3) when it is sent back to the time client, **characterized by** the steps of
- storing the actual time the time request packet (4) leaves the time client (2) as a fourth time stamp (T11) in the time client (2), after the step of time stamping the packet with the first time stamp (T1) in the time client, and
- replacing the first time stamp (T1) in the time request packet by the fourth time stamp (T11) when the time request packet has returned to the time client, in order to improve the time client accuracy.

2. A method according to claim 1,
**characterized in that** the computer network (1) is a Local Area Network (LAN).

3. A method according to claim 1 or 2,
**characterized by** the steps of
- duplicating the time request packet (4) into a time correction packet (5) in the time server (2),
- time-stamping the time correction packet with the actual time the time request packet leaves the time server in the form of a fifth time stamp (T31),
- transmitting the time correction packet (5) back to the time client (2), and
- replacing the third time stamp (T3) in the time request packet by the fifth time stamp (T31) from the time correction packet.

4. A method according to claim 1, where a store-and-forward device and/or a switching device (6) are/is in the path between the time client (2) and the timeserver (3), **characterized by**
- using a multicast or broadcast address for the time request packet (4) when transmitting the time request packet to the time server such that the time request packet is reflected to the time server from the store-and-forward device and/or switching device, and
- time-stamping the fourth time stamp (T11) in the time client (2) as the reflected time request packet returns to the time client (2) from the store-and-forward or switching device (6).

5. A method according to claim 4,
**characterized by** the steps of
- duplicating the time request packet (4) into a time correction packet (5) in the time server (2),
- time-stamping the time request packet with a third time stamp (T3) when it is sent back out using a multicast or broadcast address
- time-stamping the time correction packet with the actual time the time request packet was reflected back to the time server in the form of a fifth time stamp (T31)
- transmitting the time correction packet back to the time client (2) and
- replacing the third time stamp (T3) in the time request packet by the fifth time stamp (T31) from the time correction packet.

6. A Method according to any of the preceding claims,
**characterized by** time-stamping the fourth time stamp (T11) or the fifth time stamp (T31), either in a network transmit interrupt or by using a dedicated hardware timer.

7. The method according to any of claims 1-6 for control and protection of an energy distribution network node.

## Patentansprüche

1. Verfahren zum Verbessern der Zeitsynchronisation bei einem Netzwerk-Zeitprotokoll in einem Computernetzwerk mit einem Zeitklienten (2) und einem Zeitserver (3), wobei das Verfahren die folgenden Schritte umfasst:
- Erzeugen eines Zeit-Anforderungspaketes (4) im Zeitklienten,
- Zeitstempeln des Zeit-Anforderungspaketes mit einem ersten Zeitstempel (T1) entsprechend der Zeit, zu der das Zeit-Anforderungspaket erzeugt wird,
- Übertragen des Zeit-Anforderungspaketes zum Zeitserver,
- Zeitstempeln des Zeit-Anforderungspaketes mit einem zweiten Zeitstempel (T2) bei Erreichen des Zeitservers,
- Zeitstempeln des Zeit-Anforderungspaketes mit einem dritten Zeitstempel (T3) wenn es zum Zeitklienten zurückgeschickt wird,
**gekennzeichnet durch** folgende Schritte:
- Abspeichern der aktuellen Zeit, zu der das Zeit-Anforderungspaket (4) den Zeitklienten (2) verlässt als vierten Zeitstempel (T11) im Zeitklienten (2), und zwar nach dem Schritt des Zeitstempelns des Pakets mit dem ersten Zeitstempel (T1) in dem Zeitklienten, und
- Ersetzen des ersten Zeitstempels (T1) in dem Zeit-Anforderungspaket durch den vierten Zeitstempel (T11) wenn das Zeit-Anforderungspaket zum Zeitklienten zurückgekehrt ist, um die Genauigkeit des Zeitklienten zu verbessern.

2. Verfahren nach Anspruch 1, **dadurch gekennzeichnet, dass** da Computernetzwerk (1) ein Lokalnetz (LAN) ist.

3. Verfahren nach einem der Ansprüche 1 oder 2, **gekennzeichnet durch** die folgenden Schritte:
- Duplizieren des Zeit-Anforderungspaketes (4) in ein Zeit-Korrekturpaket (5) in dem Zeitserver (2),
- Zeitstempeln des Zeit-Korrefcturpaketes mit der aktuellen Zeit, zu der das Zeit-Anforderungspaket den Zeitserver verlässt mit einem fünften Zeitstempel (T31),
- Übertragen des Zeit-Korrekturpaketes (5) zurück zum Zeitklienten (2) und
- Ersetzen des dritten Zeitstempels (T3) im Zeit-Anforderungspaket **durch** den fünften Zeitstempel (T31) aus dem Zeit-Korrekturpaket.

4. Verfahren nach Anspruch 1, wobei eine Einrichtung zum Speichern und Weiterleiten und/oder ein Schalter (6) im Datenweg zwischen dem Zeitklienten (2) und dem Zeitserver (3) vorgesehen sind, **gekennzeichnet durch**
- Verwenden einer Vielfach- oder Rundruf-Adresse für das Zeit-Anforderungspaket (4) wenn das Zeit-Anforderungspaket zum Zeitserver übertragen wird, sodass das Zeit-Anforderungspaket von der Speicher- und Weiterleitungseinrichtung und/oder dem Schalter reflektiert wird, und
- Zeitstempeln des vierten Zeitstempels (T11) im Zeitklienten (2) wenn das reflektierte Zeit-Anforderungspaket von der Einrichtung zum Speichern und Weiterleiten oder vom Schalter (6) zum Zeitklienten (2) zurückkehrt.

5. Verfahren nach Anspruch 4, **gekennzeichnet durch** folgende Schritte:
- Duplizieren des Zeit-Anforderungspaketes (4) in ein Zeit-Korrekturpaket (5) im Zeitserver (2),
- Zeitstempeln des Zeit-Anforderungspaketes mit einem dritten Zeitstempel (T3) wenn es unter Verwendung einer Vielfach- oder Rundruf-Adresse zurückgesendet wird,
- Zeitstempeln des Zeit-Korrekturpaketes mit der aktuellen Zeit, zu der das Zeit-Anforderungspaket zum Zeitserver zurückreflektiert wurde mit einem fünften Zeitstempel (T31),
- Übertragen des Zeit-Korrekturpaketes zurück zum Zeitklienten (2) und
- Ersetzen des dritten Zeitstempels (T3) im Zeit-Anforderungspaket **durch** den fünften Zeitstempel (T31) aus dem Zeit-Korrekturpaket.

6. Verfahren nach einem der vorhergehenden Ansprüche, **gekennzeichnet durch** Zeitstempeln des vierten Zeitstempels (T11) oder des fünften Zeitstempels (T31), entweder in einer Netzwerk-Übertragungsunterbrechung oder **durch** Verwendung eines besonderen Hardware-Zeitgebers.

7. Verfahren nach einem der Ansprüche 1 bis 6 zur Steuerung und zum Schutz eines Knotens in einem Energie-Verteilungsnetzwerk.

## Revendications

1. Procédé destiné à améliorer la précision de la synchronisation temporelle du Protocole de temps réseau NTP dans un réseau d'ordinateurs (1), le réseau d'ordinateurs comportant un client de temps (2) et un serveur d'horloge (3) le procédé comportant les étapes consistant à :
- générer un paquet de requête de temps (4) dans le client de temps,
- exécuter un estampillage temporel du paquet de requête de temps au moyen d'une première estampille temporelle (T1) correspondant à l'heure à laquelle le paquet de requête de temps est généré,
- transmettre le paquet de requête de temps au serveur d'horloge,
- exécuter un estampillage temporel du paquet de requête de temps au moyen d'une seconde estampille temporelle (T2) lorsque ledit paquet arrive au serveur d'horloge,
- exécuter un estampillage temporel du paquet de requête de temps au moyen d'une troisième estampille temporelle (T3) lorsque ledit paquet est retransmis au client de temps, **caractérisé par** les étapes consistant à
- stocker l'heure en cours à laquelle le paquet de requête de temps (4) quitte le client de temps (2) en tant qu'une quatrième estampille temporelle (T11) dans le client de temps (2), postérieurement à l'étape d'estampillage temporel du paquet au moyen de la première estampille temporelle (T1) dans le client de temps, et
- remplacer la première estampille temporelle (T1) dans le paquet de requête de temps par la quatrième estampille temporelle (T11) lorsque le paquet de requête de temps est retourné au client de temps, de façon à améliorer la précision du client de temps.

2. Procédé selon la revendication 1, **caractérisé en ce que** le réseau d'ordinateurs (1) est un réseau local (LAN).

3. Procédé selon la revendication 1 ou 2, **caractérisé par** les étapes consistant à
- dupliquer le paquet de requête de temps (4) dans un paquet de correction de temps (5) dans le serveur d'horloge (2),
- exécuter un estampillage temporel du paquet de correction de temps avec l'heure en cours à laquelle le paquet de requête de temps quitte le serveur d'horloge dans la forme d'une cinquième estampille temporelle (T31),
- retransmettre le paquet de correction de temps (5) au client de temps (2), et
- remplacer la troisième estampille temporelle (T3) dans le paquet de requête de temps par la cinquième estampille temporelle (T31) du paquet de correction temporelle.

4. Procédé selon la revendication 1, dans lequel un dispositif de stockage et renvoi et/ou un dispositif de commutation (6) sont/est sur le chemin entre le client de temps (2) et le serveur d'horloge (3), **caractérisé par** l'étape consistant à :
- utiliser une adresse de multidiffusion ou de diffusion générale pour le paquet de requête de temps (4) lors de la transmission du paquet de requête de temps au serveur d'horloge de sorte que le paquet de requête de temps est renvoyé au serveur d'horloge à partir du dispositif de stockage et renvoi et/ou dispositif de commutation, et
- exécuter un estampillage temporel de la quatrième estampille temporelle (T11) dans le client de temps (2) lorsque le paquet de requête de temps renvoyé retourne au client de temps (2) à partir du dispositif de stockage et renvoi et/ou dispositif de commutation (6).

5. Procédé selon la revendication 4, **caractérisé par** les étapes consistant à
- dupliquer le paquet de requête de temps (4) dans un paquet de correction de temps (5) dans le serveur d'horloge (2),
- exécuter un estampillage temporel du paquet de requête de temps au moyen d'une troisième estampille temporelle (T3) lorsque ledit paquet est retransmis au moyen d'une adresse de multidiffusion ou de diffusion générale
- exécuter un estampillage temporel du paquet de correction de temps avec l'heure en cours à laquelle le paquet de requête de temps était renvoyé au serveur d'horloge dans la forme d'une cinquième estampille temporelle (T31),
- retransmettre le paquet de correction de temps (5) au client de temps (2), et
- remplacer la troisième estampille temporelle (T3) dans le paquet de requête de temps par la cinquième estampille temporelle (T31) à partir du paquet de correction de temps.

6. Procédé selon l'une quelconque des revendications précédentes, **caractérisé par** l'étape consistant à exécuter un estampillage temporel de la quatrième estampille temporelle (T11) ou de la cinquième estampille temporelle (T31), dans une interruption de transmission de réseau ou au moyen d'un registre d'horloge matériel.

7. Procédé selon l'une quelconque des revendications 1 à 6 pour le contrôle et la protection d'un noeud de réseau de distribution d'énergie.
